# EUROPEAN PATENT APPLICATION

(11) **EP 4 020 306 A1**
(43) Date of publication of application: **29.06.2022**
(21) Application number: 21000361.2
(22) Date of filing: 21.12.2021
(51) Int. Cl.: G06F 40/35, G06Q 10/00, H04L 51/02, G06N 3/00

(54) **METHOD FOR MULT-CHANNEL NATURAL LANGUAGE PROCESSING ON LOW CODE SYSTEMS**

(30) Priority: 23.12.2020 PT 2020116968
(71) Applicant: Altice Labs, S.A., 3810-106 Aveiro (PT)
(72) Inventor: MATOS DE ALMEIDA E SILVA, João Pedro, 3810-106 Aveiro (PT)
(74) Representative: Arnaut, José Luis

(57) **Abstract**

The diversity of communication channels available in a Virtual Assistant creation Platform result in added complexity on the development of the responses for the user utterances in multi-channel scenarios, especially in Platforms that require no (or low) technical skills to create such Virtual Assistants (also known as Low Code Systems). This is a paradox in the perspective of a low code System. This invention provides a method for defining multi-channel answers (3.1, 3.2, 3.3.) to each of the existing intents in a single window of the System User Interface, allowing the System Administrator to have an overview of the answers for an intent. The inlying advantage of this method relies on the holistic perspective of the Virtual Assistant's answers (3) per intent to the System Administrator.

## Description

### FIELD OF THE INVENTION

The present invention is enclosed in the technical area of Natural Language Processing. Specifically, it belongs to field of conversational artificial intelligence and relates to Natural Language Understanding engines, specifically the process of configuring the responses of a Virtual Assistant to user utterances in multiple channels.

### PRIOR ART

Artificial Intelligence Virtual Assistants are usually created and managed by the System Administrator in a web interface that allows to be defined the Natural Language concepts inherent to the language understanding; namely, 1) the Intents and the Training phrases associated, and 2) the Virtual Assistant's responses to the user utterances. Low code web interfaces are becoming the standard in Virtual Assistant Platforms focused on non-technical customers ~ interfaces designed to be used by anyone. But even in low code environment it is complex to manage the Virtual Assistant's multi-channel responses to the user utterances.

These multi-channel responses management aren't unified into a single interface and require adaptation / coding (requiring a technical skilled person) into the channel's own interface, representing a complex task in the creation of a multi-channel Virtual Assistant. The complexity grows with the increasing number of channels that are supposed to be supported by the Virtual Assistant.

### PROBLEM TO BE SOLVED

The communication channels diversity (e.g. webchat, Facebook Messenger, Whatsapp, WeChat, IVR, SIP client / voice interface, among others) represents highly complex developments in a Virtual Assistant Platform. Managing the Virtual Assistant's multi-channel responses through a single and simple user-friendly interface is a challenge. Supporting such a diversity of channels, without the existence of such interface means that tailor-made developments will be required, which translates into additional complexity. This is a paradox in the perspective of a low code System.

### SUMMARY OF THE INVENTION

The present invention is related to Virtual Assistant Platform (hereby called System) ecosystems, more specifically in the Virtual Assistant response configuration to a user utterance.

The heterogeneity of Digital communication channels has been increasing (e.g Webchat, Facebook Messenger, WhatsApp, Skype, Teams, Slack, WeChat, to mention some) as the world population becomes more and more connected. In parallel, the developments in Artificial Intelligence have driven to a revolution in the relationship between Humans and machines, namely in the Natural Language universe, allowing the massification of intelligent Virtual Assistants with multi-channels capabilities. Systems' providers are facing the challenge to combine the communication channels (and their responses to the user) in an easy-to-use graphical user interface. The channels heterogeneity often means that the Virtual Assistant configuration responses (referred to herein as "answers") in a multi-channel environment are not unified into a single interface, and consequently require adaptation to the channels interface and therefore result in a complex customization / development in the Virtual Assistant Platform.

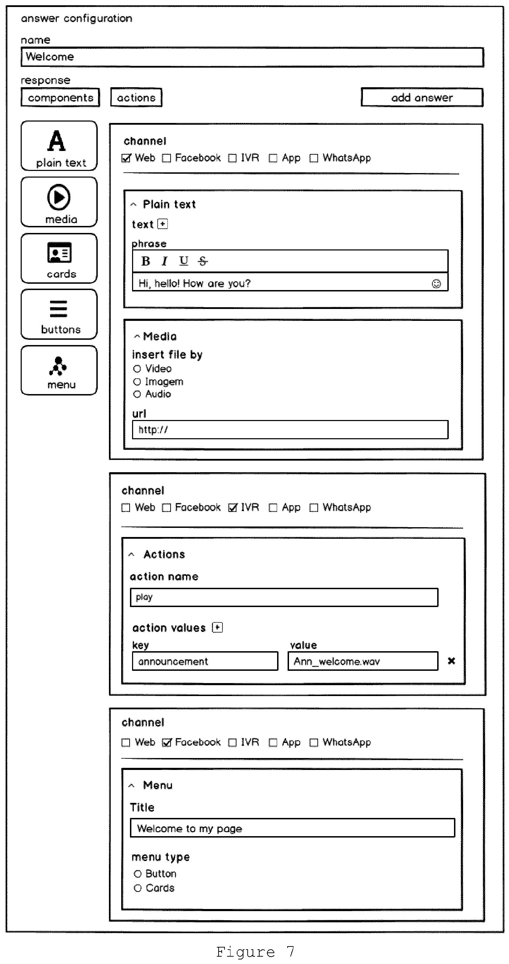

The invention provides a method for defining multi-channel answers to each of the existing intents in a single window of the System User Interface, simplifying the configuration of answers - the System Administrators (those who create and manage the Virtual Assistants) can have an overview of the answers for an intent, as shown in Figure 7. The inlying advantage of this method relies on the holistic perspective of the Virtual Assistant's answers per intent to the System Administrator.

### DESCRIPTION OF FIGURES

Figure 1: An interaction between a user and a Virtual Assistant. It is shown the user utterance, which was recognized as Intent 1. The Virtual Assistant replied with the Answer (for the used channel) associated to Intent 1. The reference numbers represent:
   1 - user;
   2 - virtual assistant;
Figure 2: High level view of a Virtual Assistant with several intents, and Answers defined for each Intent (Meta-Answer). "Virtual Assistant Meta-Answer 1" is set as the answer for the user when "Intent 1" is the selected intent by the NLU engine. The reference numbers represent:
   2 - virtual assistant;
   3 - virtual assistant meta-answer;
Figure 3; Content of one Meta-Answer. One Meta-Answer can contain several answers in multiple channels. The reference numbers represent:
   3 - virtual assistant meta-answer;
   3.1 - virtual assistant meta-answer for channel A;
   3.2 - virtual assistant meta-answer for channel B;
   3.3 - virtual assistant meta-answer for channel n;
Figure 4: Detail of a meta-answer. This meta-Answer contains three answers, all in the same channel A-1. It's a channel that supports at least plain text, menus and images. The reference numbers represent:
   3 - virtual assistant meta-answer;
   4.1 - channel A-1.
Figure 5: Detail of a meta-answer. This meta-Answer contains three answers in three channels: one in a text channel A-1, one in a voice channel B-2 and another in an avatar/physical robot channel C-1. The answers use the channel's specific features. The reference numbers represent:
   3 - virtual assistant meta-answer;
   4.1 - channel A-1;
   4.2 - channel B-2;
   4.3 - channel C-1.
Figure 6: Detail of a meta-answer. Multi-channel meta-answer using variables. The reference numbers represent:
   2 - virtual assistant;
   3 - virtual assistant meta-answer;
Figure 7: Meta-answer graphical user interface example. This example contains 3 answers in 3 channels. The first answer is for a Web channel and consists of one text answer and one media answer. The second answer is for IVR and contains one action to play a specific announcement. Finally, the third answer is for Facebook, and contains a Facebook Menu, with its specific characteristics.
Figure 8: Represents the processing flow of a channel order, this image represents the implementation of the innovation presented. Here are the different phases of the process:
   Step I: IMH - Intelligent Message Hub, based on a plugins pattern, implements the channels protocol, so it is responsible for receiving requests from channels (Webchat, Facebook Messenger, Whatsapp, WeChat, SipClient, among others);
   Step II: Submit the request in an event broker, in order to persist the requests, and be able to scale horizontally;
   Step III: Process queue requests and invoking the NLU engine through RESTFull API (can be internal or external). It's important to refer that all requests are converted into a phrase or in the limit to a simple word;
   Step IV: NLU / Brain, based on context and in the utterance, identifies the response to apply, sending the response request to the event broker;
   Step V: IMH takes the response request, maintaining the context of the channel, and through the configured settings (Figure 7), builds the message to be sent to the respective channel(s).
   The reference numbers represent:
   - 5 -: Intelligent Message Hub;
   - 6 -: channels protocol;
   - 7 -: event broker;
   - 8 -: NLU engine;
   - 9 -: operator service;
   - 10 -: session manager;
   - 11 -: user manager;
   - 12 -: hypermedia;
   - 12.1 -: hypermedia server;
   - 13 -: answer user interface;
   - 14 -: system configuration;
   - 14.1 -: Meta-Answer configuration.

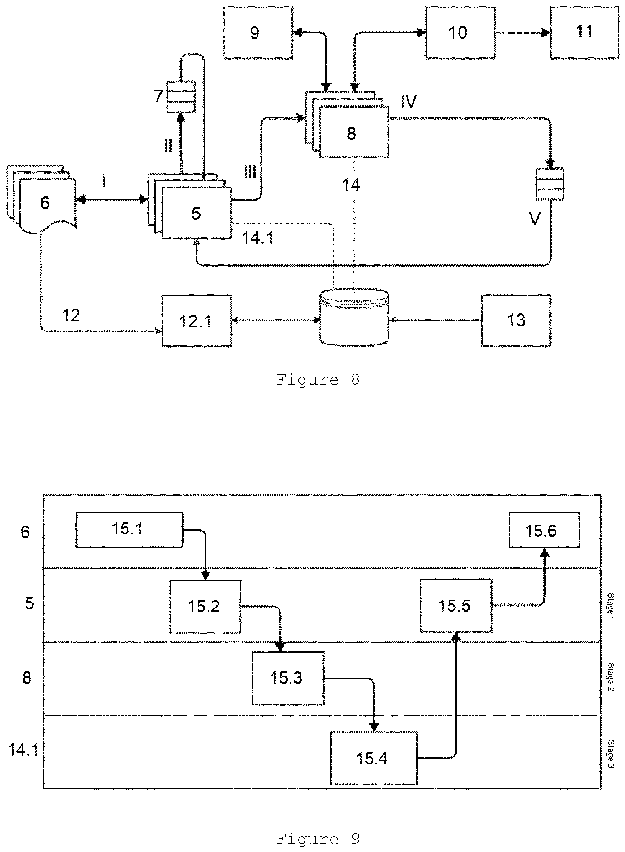

Figure 9: Represents the different stages of the channel request processing, from the channel request until it identifies the correct answer to deliver to the channel. The process consists of the following steps:
   1) Composed by the protocol adaptation by channel. A logical component, represented as IMH - Intelligent Message Hub, based on plugins, allows the support of different channels.
   2) A natural language processing step, in which through an utterance and based on the context, decides which meta-answer to give.
   3) Based on the identification of the message (meta-answer) to be answered, and through the configured settings (Figure 7), is chosen the message to be presented to the channel. The message payload is built according to the specificity of the channel protocol. The reference numbers represent:
      5 - Intelligent Message Hub;
      6 - channels protocol;
      8 - NLU engine;
      14.1 - Meta-Answer configuration.
      15.1 - Message from the channel, e.g. "hello" from WhatsApp;
      15.2 - Hub protocolar - Interface for the channel;
      15.3 - Identification of the best answer;
      15.4 - Based on the channels, returns the correct answer;
      15.5 - Build the answer for the channel;
      15.6 - Returns the answer: e.g. "Hi, how are you?".

### DETAILED DESCRIPTION

The evolution of Artificial Intelligence has allowed a rapid increase of the Virtual Assistant's (also referred to Digital Assistants, Virtual Agents, bots or chatbots, among others) cognitive capacities, which are evolving to support interactions in Natural Language and additional cognitive skills such as, sentiment analysis, voice tone analysis, biometric identification (voice or facial), image recognition, among others, by which the user can interact with the Virtual Assistant. The ability to do sentiment analysis, in addition to the ability to understand the language, has enabled digital Virtual Assistants to have an increased level of intelligence.

Virtual Assistant's low code systems are facing the need to be multi-channel, but in view of their heterogeneous interfaces and different capacities, have a great challenge to give a common and simple interface for the System Administrator. The present invention focuses on the difficulty to manage responses on multiple channels, mainly from the point of view of the creation of the Virtual Assistant's low code System, providing an architecture and interfaces which allow a way to deal with this complexity.

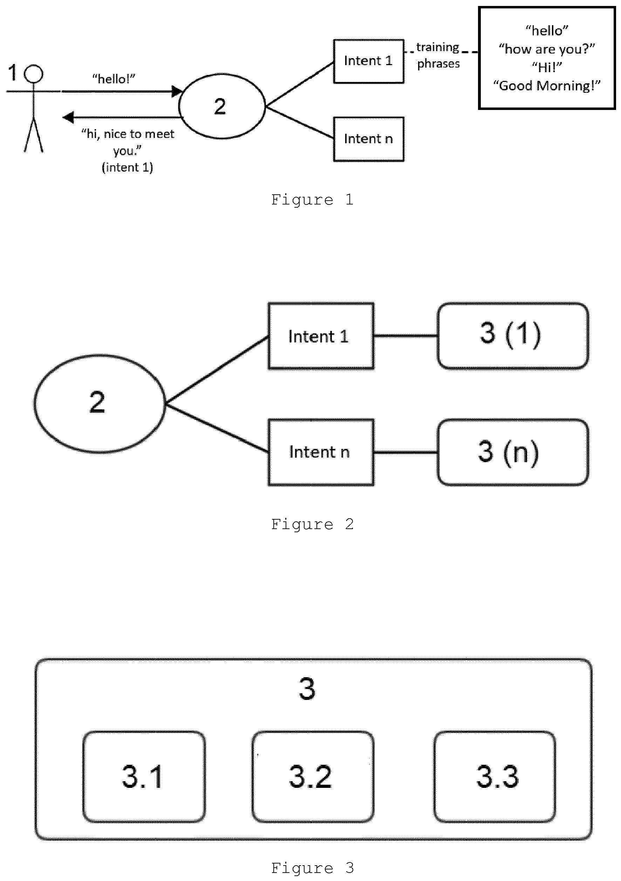

The System Administrator uses the system user interface to set the intents, associating its training phrases (Figure 1), as well as compose the response from the system - the answer - (Figure 2) . An intent is a name that the system recognizes, and it is typically associated to a specific action like defining an answer to the user. Intents capture / define a general meaning of a set of phrases (the motive behind the user utterances), and that enables the NLU (Natural Language Understanding) engine to recognise / propose a list of intent candidates with different accuracies. Training phrases are examples of sentences (utterances) that the user might use to refer to an intent.

The answer (or response) is the reply of the system to the user when a specific intent is recognized. A dialog with the system (Virtual Assistant), in simple terms, is composed by a user utterance (user says, that typically can be in text or voice), and the answer of the system to that user input.

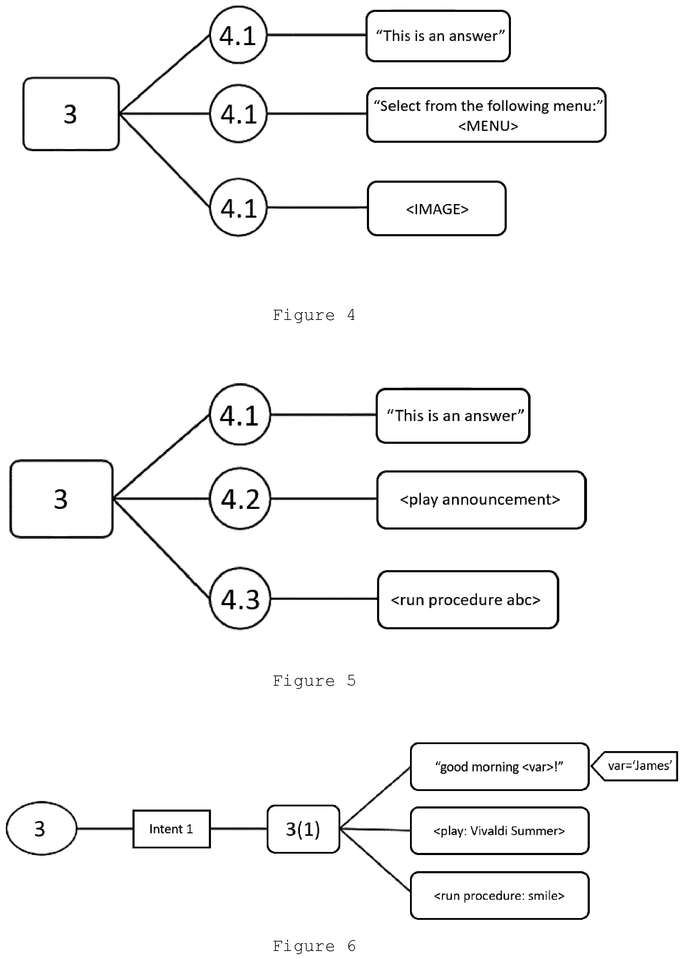

Depending on the channel used, answers can be different from one another. This happens because each channel typically supports different features (Figure 4, Figure 5), allowing different responses that take advantage of the said features, and therefore allowing a better way to deliver the information / response (to improve the User Experience). In Figure 4 and Figure 5, are presented examples of these scenarios, in which for the same intent, and depending on the channel, the answer is presented in a different way. For example, a channel can simply support Plain Text without any formatting, or support a range of features, like Rich Text (in the forms of supporting a different font, font size, Bold, Italic, Underline, and other text aspect enrichment apparatus), media (such as images, videos, sounds), buttons, menus, and cards, or even voice interactions.

The present invention provides a method to unify the configuration of each answer, abstracting the diversity of the existent communication channels (e.g. webchat, Facebook Messenger, WhatsApp, WeChat, IVR, sip client / voice interface, or any other channel) and their distinct characteristics, into a single window of the system's user interface.

The system's user interface shows only the specific features of the channel for each of the selected channels in the answer configuration window, as shown in the Figure 7. In an extreme example, different text channels can have different content altogether. This applies to other channel types as well, for example voice, or any other medium for communicating with the user.

The System Administrator uses this single window to define / configure the "meta-answer" (Figure 3), being possible to select the channels that the system will be able to respond and setting the answer for each one (Figure 4 and Figure 5). The System Administrator also matches this "meta-answer" to a specific node in the dialogue (conversation), which normally corresponds to a user intent.

The application of the method of the present invention to a virtual assistant system, allows to reduce the complexity of the development of these multi-channel virtual assistants, allowing a more uniform experience even if multiple channels are used in the answer.

In some cases, the same intent may have associated different responses (depending on the dialogue conversation context), but the management of these contexts and how the choice of the correct intent is processed is not the target of this patent, being related with methods for performing natural language processing. However, despite the channels characteristics or interface used, it should be noted that for the NLU and NLP (Natural Language Processing) to work (to apply the understanding and identify the intent), it is required to convert the user utterance to text (one word, or phrases). The answer no longer needs to follow this conversation / harmonization and it can be adjusted to the channel and its own characteristics.

Giving some examples:
1. IVR: in this case the input can be DMTF (Dual-Tone Multi-Frequency) or Voice, but these inputs need to be converted to text (e.g., for the DTMF for the key press 1, should be converted to text "one"), where the answer can be one of follow options:
   a. Play a pre-recorded announcement with the message
   b. Play a dynamic answer using Text-to-Speech
2. Webchat: In this case the input can be an action, like pressing a button or a link, or text, or audio. Any input other than text, you need to have associated a text, or word, so that the NLU can be applied (e.g., for a Button that means play, for the NLU the text should be "play one"). The answers can be one of the following:
   a. Simple text, with or without formatting;
   b. Media such as images or videos;
   c. Documents or generic files (attachments);
   d. HMTL cards or HTML widgets such as cards, buttons, menus.
3. Facebook Messenger: In this case the input can only be text, and the answer can be one of the following:
   a. Simple text, with or without formatting;
   b. Images, videos, or links;

The present innovation considers that the system can interact with multiple channels, and due the conversation already mentioned, allows that different channels trigger the same intent (Figure 4 and Figure 5).

Considering the description, the present innovation is composed of the following stages, defined in Figure 9:
Stage 1) composed by the protocol adaptation by channel. In this phase, a logical component, represented as IMH - Intelligent Message Hub, based on plugins, allows the support of different channels. This component allows the protocol transformation, transforming the requests to a common request / interface, where all interactions are mapped into sentences or in simple words, so that they can be used in the next stage. This component can handle stateful calls, using session management whenever applicable;
Stage 2) Is outside the scope of this patent, and relates to, through an user's utterance and based on the context, decides which meta-answer to give / return;

Finally, Stage 3) is based on the identification of the response to be answered, according to the configuration (Figure 7), it chooses the answer to be presented to the channel. The message payload is built accordingly to the specificity of the channel protocol. A more detailed description follows.

### stage 1:

Every Channel interacts with a Central Hub interface called IMH (Intelligent Message Hub), represented in Figure 8, that is responsible for:
1) Implement the channel protocol, through a plugin approach;
2) Manage, and in the case of synchronous interface with session, maintain the context and convert all the interactions to an asynchronous event, in text format, that is sent to the NLU/NLP (also called Brain or decider);
3) Converts all interactions to events (answer's request), through the request submission in an event broker. This way, the component itself can scale horizontally, ensuring the information persistence;
4) Process the events in queue, calling the NLU Engine through RESTFull requests;
5) In the case that the NLU isn't able to identify the intent (to be identified it needs to surpass a certain threshold defined by the System Administrator), and if fallback to external system is activated, it will route the message to the external system, e.g. Contact Center system. It's important to mention, that fallback answer can be also configured by the System Administrator /
User;

### Stage 2:

As mentioned, this step will not be described as it is not part of the present innovation.

### Stage 3:

All configurations (that can include the media type configurations) performed on the interface (Figure 7), are persisted internally in a database, but for the purpose of this innovation the mechanism for storing this information is not relevant. The NLU engine, after identifying the correct answer, submits an event to the event broker, signaling the desired meta-answer. At this point, the IMH processes these messages in the queue, doing the following:
1) Implement the answer according with the definition in the system user interface, taking advantage of the different channels capacity;
2) Prepare and deliver the answers configured for the chosen channel;
3) In the case of Web interfaces, like the WebChat, the media type information is presented to the channel, through the use the HATEOAS (Hypermedia As the Engine of Application State);

In the System User Interface, the answer message can be configured for the different channels, which can have different behaviours/characteristics. In the Figure 7, is shown a representation of the configuration user interface. The answer screen allows to add, for one or for several channels, the responses the Virtual Assistant will give to the user, considering the specific characteristics of each channel.
1) For example, when the channel IVR is selected, it is possible to send an action to play a pre-defined announcement or send an action to transform text to speech.
2) When the channel supports text, for example Web or Facebook Messenger, there are specific tools to improve the user experience, like:
   a. Compose the Virtual Assistant's answer by adding text using fixed parts and/or variable parts (Figure 6). Also formatting the text, such as bold or underline, include emojis, or adding links (and if the link is open in the same window or in a new window).
   b. Adding graphic elements like images, cards or selectable buttons or menus.
   c. Show a video or play an audio.

In this way, through the combination described in present innovation, where with an advanced but simple configuration interface combined with the architecture / process described, it is possible to overcome the current restrictions / challenges of multi-channel support in the Virtual Assistant Platform Low Code. This inventon allows Low code platforms, to provide a very powerful interface / System that combines the advanced capabilities of the NLU / NLP ( Natural Language Understanding capabilities) with the support of the different channels maitaining their different capabilities and this way allowing a better and richer user experience.

### DESCRIPTION OF THE EMBODIMENTS

The present invention relates to a method for performing multi-channel natural language processing in a virtual assistant system. Said method comprises the following steps:
i. implementing a channel protocol by an intelligent message hub, adapted to establish a communication with a channel;
ii. Receiving an answer's request from the channel by the intelligent message hub;
iii. Processing the answer's request by the intelligent message hub according to the respective channel protocol, in order to transform the answer's request in a common request containing a sentence or in a word;
iv. invoking an NLU engine programmed to identify a meta-answer based on the common request;
v. generating of an answer message based on the meta-answer and configuring said message according to the channel protocol by the intelligent message hub;
vi. sending the configured answer message to the channel.

In one embodiment of the method, the channel protocol comprises a set of parametrization features according to which the answer's request and the answer's message are supported by the respective channel. Particularly, the set of parametrization features may relate to:
- supporting only plain text without any formatting or supporting rich text in forms of a different fonts, sizes and text enrichment features such as 'Bold', Italic', 'underline';
- supporting media files, such as images, videos, sounds or voice interactions;
- supporting interface components such as buttons, menus or cards.

In another embodiment of the method, the intelligent message hub implements different channel protocols for support different channels. The implementation of different channel protocols in the intelligent message hub is based on a plugins pattern.

In another embodiment of the method, the intelligent message hub converts an interaction into an answer's request, through a request submission in an event broker. In another embodiment of the method, the answer's requests are scaled horizontally in the event broker.

In another embodiment of the method, the NLU engine is configured to identify the meta-answer based on a context and in a user utterance contained the in the answer's request.

The present invention also relates to an artificial intelligence virtual assistant system. The system comprises the following elements:
- an intelligent message hub;
- an NLU engine; and
- a user interface unit adapted to provide the interface to a system administrator,
the referred elements being configured to implement the method of the invention.

## Claims

1. Method for performing multi-channel natural language processing in a virtual assistant system, **characterized by** comprising the following steps:
i. implementing a channel protocol by an intelligent message hub, adapted to establish a communication with a channel;
ii. Receiving an answer's request from the channel by the intelligent message hub;
iii. Processing the answer's request by the intelligent message hub according to the respective channel protocol, in order to transform the answer's request in a common request containing a sentence or in a word;
iv. invoking an NLU engine programmed to identify a meta-answer based on the common request;
v. generating of an answer message based on the meta-answer and configuring said message according to the channel protocol by the intelligent message hub;
vi. sending the configured answer message to the channel.

2. Method according to claim 1, wherein the channel protocol comprises a set of parametrization features according to which the answer's request and the answer's message are supported by the respective channel.

3. Method according to claim 2 wherein the set of parametrization features relates to:
- supporting only plain text without any formatting or supporting rich text in forms of a different fonts, sizes and text enrichment features such as 'Bold', Italic', 'underline';
- supporting media files, such as images, videos, sounds or voice interactions;
- supporting interface components such as buttons, menus or cards.

4. Method according to any of the previous claims, wherein the intelligent message hub implements different channel protocols to support different channels.

5. Method according to claim 4 wherein the implementation of different channel protocols in the intelligent message hub is based on a plugins pattern.

6. Method according to any of the previous claims, wherein the intelligent message hub converts an interaction into an answer's request, through a request submission in an event broker.

7. Method according to claim 6, wherein the answer's requests are scaled horizontally in the event broker.

8. Method according to any of the previous claims, wherein the NLU engine is configured to identify the meta-answer based on a context and in a user utterance contained in the answer's request.

9. Artificial Intelligence virtual assistant system comprising the following elements:
- an intelligent message hub;
- an NLU engine;
- a user interface unit adapted to provide the interface to a system administrator,
wherein,
the elements are configured to operate according to the method of claims 1 to 8.
